# EUROPÄISCHE PATENTSCHRIFT

(11) **EP 2 594 406 B1**
(45) Veröffentlichungstag und Bekanntmachung des Hinweises auf die Patenterteilung: **13.04.2022**
(21) Anmeldenummer: 12007551.0
(22) Anmeldetag: 07.11.2012
(51) Int. Cl.: B41M 5/26, B23K 26/08, B23K 26/00, B23K 26/06

(54) **LASERPLOTTER UND VERFAHREN ZUM GRAVIEREN, MARKIEREN UND/ODER BESCHRIFTEN EINES WERKSTÜCKES**
Laser plotter and method for engraving, marking and/or labelling a workpiece
Traceur laser et procédé de gravure, marquage et/ou inscription d'une pièce à usiner

(30) Priorität: 07.11.2011 AT 16362011
(43) Veröffentlichungstag der Anmeldung: 22.05.2013
(73) Patentinhaber: Trotec Laser GmbH, 4614 Marchtrenk (AT)
(72) Erfinder: Fazeny, Stephan, A-4810 Gmunden (AT)

(56) Entgegenhaltungen:
- EP-A1- 1 577 048
- WO-A2-01/36208
- US-B1- 6 822 192

## Beschreibung

Die Erfindung beschreibt ein Verfahren zum Gravieren, Markieren und/oder Beschriften eines Werkstückes mit einem Laserplotter, bei dem in einem Gehäuse des Laserplotters mehrere, insbesondere zwei Strahlquellen in Form von Lasern eingesetzt werden, die bevorzugt abwechselnd auf das zu bearbeitendes Werkstück einwirken, wobei das Werkstück auf einem Bearbeitungstisch definiert abgelegt wird und ein von der Strahlquelle abgegebener Laserstrahl über Umlenkelemente an zumindest eine für die zumindest zwei Strahlquellen ausgebildete Fokussiereinheit gesendet wird, von der der Laserstrahl in Richtung Werkstück abgelenkt und zur Bearbeitung fokussiert wird, wobei die Positionssteuerung des Werkstückes zum Laserstrahl, über eine in einer Steuereinheit des Laserplotters laufende Software erfolgt, wobei an einer externen Komponente, insbesondere einem Computer oder einem Steuergerät, eine Grafik und/oder ein Text erstellt wird, welche an die Steuereinheit des Laserplotters übergeben wird, die aus einer hinterlegten Datenbank eine Konvertierung der übergebenen Daten der Grafik und/oder des Textes zum Steuern der einzelnen Elemente des Laserplotters (1) vornimmt, wie es in dem Anspruch 1 beschrieben ist. Weiters beschreibt die Erfindung einen Laserplotter zum Gravieren, Markieren und/oder Beschriften von Werkstücken, bestehend aus einem Bearbeitungstisch zum Positionieren des Werkstückes, zumindest zwei Strahlenquellen in Form von Lasern mit entsprechenden Umlenkelementen und einer bevorzugt verfahrbaren Fokussiereinheit und einer Steuereinheit zum Steuern der einzelnen Elemente, wobei die Steuereinheit zum Empfang von an einer externen Komponente erzeugten Daten, einer Grafik und/oder einem Text, ausgebildet ist und eine Datenbank zur Konvertierung der übersendeten Daten angeordnet ist, wie er im Anspruch 9 beschrieben ist.

Aus der EP 1 577 048 A1, auf welcher die zweiteilige Anspruchsfassung basiert, ist ein Laserplotter der Anmelderin bekannt, der mit zwei Strahlquellen ausgestattet ist, die abwechselnd betrieben werden.

Weiters ist aus der WO 01/36208 A2 ein Verfahren zum Aufbringen von farbigen Informationen auf einen Gegenstand bekannt, wobei der Gegenstand zumindest in einer oberflächennahen Schicht verschiedenartige farbgebende Partikel aufweist, die unter dem Einfluss des Lasers die Farbe dieser Schicht verändert.

Aus der US 6 822 192 B1 ist ein Laserplotter mit einer Strahlquelle bzw. Laser bekannt, bei dem bestimmte Parameter des Lasers durch Auswahl einer Farbe ausgewählt bzw. beeinflusst werden kann. Dabei wird in einem bestimmten Softwareprogramm auf einen externen Computer der Text in einem bestimmten Farbton erstellt oder bei einer Grafik eine bestimmte Fläche mit entsprechender Farbe ausgefühlt, sodass entweder die Laserleistung bzw. die Geschwindigkeit oder die Tiefe des zu bearbeitenden Materials beeinflusst wird. Nachteilig ist hierbei, dass der Nutzer nur eine beschränkte Anzahl von zu beeinflussenden Parametern auswählen kann. Ein weiterer wesentlich Nachteil liegt darin, dass der Nutzer nur ein bestimmtes Softwareprogramm verwenden kann, auf dem die Farbangaben abgestimmt sind, sodass bei einem Wechsel auf ein anderes Softwareprogramm eine neuerliche Abstimmung/Einstellung durchgeführt werden muss. Dies ist unteranderem deshalb notwendig, da oftmals die einzelnen Softwareprogramme unterschiedliche Code's für die verschiedensten Farben generieren.

Aus dem Stand der Technik, insbesondere der WO 1999/038643 A, ist zum Gravieren, Markieren und/oder Beschriften ein Laserplotter bekannt, bei dem in einem Gehäuse mehrere, insbesondere zwei Strahlenquellen in Form von Lasern angeordnet und betrieben werden. Die Laser wirken bevorzugt abwechselnd auf das zu bearbeitende Werkstück ein, wobei das Werkstück auf einen Bearbeitungstisch definiert positioniert ist. Dabei wird ein von der Strahlenquelle abgegebener Laserstrahl über Umlenkelemente an zumindest eine für beide Strahlenquellen ausgebildete Fokussiereinheit gesendet, von der der Laserstrahl in Richtung Werkstück abgelenkt und zur Bearbeitung fokussiert wird. Die Steuerung, insbesondere die Positionssteuerung des Werkstückes zum Laserstrahl erfolgt über eine in einer Steuereinheit laufende Software. Dabei wird an einer externen Komponente, insbesondere einem Computer oder einem Steuergerät eine Grafik und/oder ein Text erstellt, welche/r an die Steuereinheit des Laserplotters übergeben wird, die aus einer hinterlegten Datenbank eine Konvertierung der übergebenen Daten, insbesondere der Grafik und/oder des Textes, zum Steuern der einzelnen Elemente des Laserplotters vornimmt.

Nachteilig ist hierbei, dass bei einem derartigen Laserplotter die Zuordnung der einzelnen Strahlenquellen, insbesondere Laser, zu den Beschaffenheiten der Materialien des Werkstückes vom Benutzer bei jedem neuen Arbeitsvorgang manuell eingestellt werden muss.

Aus der US 4 877 939 A ist eine Vorrichtung zur Bearbeitung von Werkstücken mittels Laserstrahlung bekannt, die einen ersten Laser mit einer ersten Wellenlänge und einen zweiten Laser mit einer zweiten Wellenlänge aufweist. Dabei übernimmt der erste Laser eine Vorabbearbeitung der Oberfläche, insbesondere ein Vorritzen des Werkstückes, worauf der zweite Laser den eigentlich Arbeitsstrahl liefert. Die Laser können dabei unterschiedlicher Bauart, wie beispielsweise CO2-, YAG- oder UV-Laser, gebildet sein.

Weiters ist in der US 6 313 433 B und der US 6 423 925 B ein Laserbearbeitungsgerät beschrieben, das eine Strahlumlenkvorrichtung umfasst, mit der ein Bearbeitungsstrahl in XY-Ebene verstellbar ist und zwei eigenständige, unabhängig voneinander steuer- bzw. regelbare Laserquellen aufweist. Dabei werden die beiden Laserquellen parallel zueinander betrieben.

Der vorliegenden Erfindung lieg die Aufgabe zu Grunde, einen Laserplotter sowie ein Verfahren zum Gravieren, Markieren und/oder Beschriften zu schaffen, bei dem ohne Unterbrechung in einem Arbeitsablauf unterschiedliche Laserquellen für unterschiedliche Oberflächen eingesetzt werden, sodass die Qualität verbessert wird und eine hohe Arbeitszeiteinsparung erzielt wird. Eine weitere Aufgabe liegt darin, den Bedienkomfort eines derartigen Laserplotters zu verbessern und mögliche Eingabefehler zu minimieren.

Die Aufgabe der Erfindung wird durch ein Verfahren nach Anspruch 1 gelöst.

Vorteilhaft ist hierbei, dass der Benutzer somit die Daten, insbesondere den Korrekturwert für die unterschiedlichen Laser, eingibt und anschließend diese Daten für jeden neuerlichen Graviervorgang herangezogen werden können. Da die Zuordnung der Laser durch Farben definiert ist, wird auch die Verwechslungsgefahr wesentlich verringert, da die Farben an die zu bearbeitenden Materialien angepasst werden können. Ein wesentlicher Vorteil liegt darin, dass es nunmehr einfach möglich ist, dass für die unterschiedlichsten Ebenen und unterschiedlichsten Graviertiefen einfach nur unterschiedliche Farben definiert werden, sodass eine sehr einfache Zuordnung möglich ist und nicht, wie aus dem Stand der Technik üblich, entsprechende Werte für die unterschiedlichsten Bedingungen eingegeben werden müssen. Ein weiterer wesentlicher Vorteil liegt darin, dass durch die Verwendung von Farben als Kriterium für die Unterscheidung der verschieden Laser und/oder Graviertiefen und/oder Bearbeitungsebenen nunmehr die Möglichkeit geschaffen wurde, dass eine Vielzahl von unterschiedlichen Programmen bzw. Software eingesetzt werden kann, da hierzu nur am Programm die entsprechende Farbe bzw. Farbe-Code ausgewählt werden muss. Damit kann jeder Benutzer die von ihm am liebsten verwendete Software einsetzen und es müssen keine Anpassungen, Konvertierungen und/oder Programmiervorgänge beim Datenaustausch mit der Steuereinheit des Laserplotters vorgenommen werden. Durch das einmalige Hinterlegen der Werte werden auch Eingabefehler vermieden. Ein weiterer Vorteil, bei dem eine Farbe, insbesondere ein Farb-Code durch einen Bereich, insbesondere einer Bereichsangabe von/bis, bestimmt wird, liegt darin, dass damit eine größere Zuordnungsmöglichkeit geschaffen wird und der Benutzer nicht mehr die exakt vorgegebene Farbe, insbesondere mit dem exakten Farb-Code, verwenden muss. Somit wird die Farbwahl für den Benutzer auf den unterschiedlichen Programmen wesentlich erleichtert

Es sind aber auch die Maßnahmen, bei denen auf den externen Komponenten standardisierte Programme, wie beispielsweise Word, Excel, Paint, Corel Draw, usw. laufen, von denen die Grafik und/oder der Text mit unterschiedlichen Farben erstellt und anschließend an die Steuereinheit des Laserplotters übertragen werden, von Vorteil, da dadurch eine dem Benutzer vertraute Software eingesetzt werden kann, wodurch die hohen Kosten für Einschulungen und Anpassungen, die für spezielle Steuerprogramme notwendig sind, eingespart werden können. Damit wird auch erreicht, dass der Benutzer die für ihn bestmögliche Oberfläche zum Erstellen der Grafik bzw. des Textes auswählen kann.

Durch die Maßnahmen, bei denen an der externen Komponente für unterschiedliche Graviertiefen und/oder unterschiedliche Werkstückhöhen unterschiedliche Farben definiert werden, und diesen Farben unterschiedliche Höhenwerte zugeordnet werden, wird in vorteilhafter Weise erreicht, dass nicht nur ebenflächige Werkstücke bzw. Rohlinge bearbeitet werden können, sondern auch Werkstücke mit unterschiedlichen Bearbeitungsebenen, wobei die Zuordnung wiederum in einfacher Form über die Farben erfolgt. Auch ist eine optische Darstellung der Gravur bzw. des Textes einfach möglich, wodurch der Benutzer sofort die unterschiedlichsten Höhen aufgrund der unterschiedlichen Farben erkennen bzw. zuordnen kann.

Von Vorteil sind auch die Maßnahmen, bei denen in der externen Komponente oder bei der Übertragung zur Steuereinheit oder von der Steuereinheit selbst jeder Farbe der Grafik und/oder des Textes ein bestimmter vordefinierter Farbcode zugeordnet wird, da dadurch auf einfach Art und Weise eine Anpassung an den Laserplotter erfolgen kann.

Vorteilhaft sind aber auch die Maßnahmen, bei denen von der Steuereinheit des Laserplotters die Farbe, insbesondere die Farb-Codes, aus den unterschiedlichen externren Komponenten, insbesondere den unterschiedlichen Grafik-Softwareprogrammen, übernommen wird, da somit eine schnellere Übertragungszeit erreicht wird, da keinerlei Anpassungen mehr vorgenommen werden müssen und trotzdem eine eindeutige Zuordnung möglich ist.

Bei einer Maßnahme, bei der in der Steuereinheit des Laserplotters die von den unterschiedlichen Komponenten übergebenen Farb-Codes jeweils einem für die verwendete externe Komponente hinterlegten Farb-Code zugeordnet wird, wird in vorteilhafter Weise erreicht, dass für jede Anwendung eine entsprechende Anpassung vorgenommen werden kann. Damit kann eine noch höhere Qualität erreicht werden bzw. können dem Benutzer je nach Anwendung mehrere Farben zur Verfügung gestellt werden.

Vorteilhaft sind auch die Maßnahmen, bei denen den Farben unterschiedliche Farb-Codes zugeteilt sind und der Korrekturwert der Strahlenquelle mit dem Farb-Code für die Graviertiefe kombiniert wird, da dadurch der Benutzer keinerlei Rücksicht auf die unterschiedlich einzusetzenden Laser bzw. Strahlenquellen nehmen muss.

Von Vorteil ist auch eine Maßnahme, bei der besagtes Verfahren zum Gravieren, Markieren und/oder Beschriften eines Kugelschreiber mit unterschiedlichen Gravierbereiche und unterschiedlichen Höhenpositionen eingesetzt wird, da dadurch für die unterschiedlichen Bereiche und Ebenen unterschiedliche Farben festgelegt werden können, sodass die Erstellung einer Grafik und/oder eines Textes vereinfacht wird, da der Benutzer auf keinerlei Gegebenheiten des Werkstückes, wie beispielsweise unterschiedliche Gravierebenen, aufpassen muss.

Weiters wird die Aufgabe der Erfindung mit einem Laserplotter nach Anspruch 9 gelöst.

Vorteilhaft ist hierbei, dass eine sehr einfach Bedienung für den Benutzer geschaffen wird, wobei die Graviereigenschaften der erstellten Grafik bzw. des Textes auch optisch an der Anwendersoftware erkennbar sind. Auch ist es damit möglich, eine sehr große Anzahl von standardisierten Programmen bzw. Software einzusetzen. Von Vorteil ist auch, dass in der Datenbank zu einer Farbe, insbesondere dem Farb-Code ein Bereich, insbesondere einer Bereichsangabe von/bis, hinterlegt ist, da dadurch die Auswahl der Farbe bei den verschiedenen Programmen vereinfacht wird, da der Benutzer nicht mehr die exakte Farbe auswählen muss, sondern Farben wählen kann, die in diesen Bereich hineinfallen.

Von Vorteil ist eine Ausgestaltung, bei der der Laserplotter so ausgebildet ist, dass zum Gravieren des Werkstückes der Bearbeitungstisch und/oder die Fokussiereinheit in der Höhe verstellbar sind, da dadurch auf einfache Art und Weise unterschiedliche Ebenen bearbeitet und/oder unterschiedliche Graviertiefen erzeugt werden können.

Bei einer Ausgestaltung, bei der die externen Komponenten durch einen Computer oder ein Steuergerät, auf dem eine Software zum Erstellen der Grafik und/oder des Textes anwendbar ist, gebildet ist und diese über eine sichere schnelle Datenverbindung mit dem Laserplotter, insbesondere der Steuereinheit, verbunden ist, wird in vorteilhafter Weise erreicht, dass dadurch dem Benutzer die Möglichkeit gegeben wird, dass dieser eine beliebige Software zum Erstellen der Grafik und/oder des Textes verwenden kann. Damit wird auch die Möglichkeit geschaffen, dass der Benutzer die Grafik und/oder den Text in einem vom Laserplotter getrennten Raum in Ruhe erstellen kann und diese anschließend zur Bearbeitung über ein standardisiertes Netzwerk, insbesondere über ein Intranet, an den Laserplotter überträgt.

Bei der Ausgestaltung, bei der der Laserplotter so ausgebildet ist, dass für die unterschiedlichen Strahlenquellen und für die unterschiedlichen Graviertiefen verschiedene Farben definiert sind, wird in vorteilhafter Weise erreicht, dass der Benutzer auf jeder beliebigen Software die Grafik und/oder den Text erstellen kann, die die entsprechende Farbe zur Auswahl hat. Damit braucht der Benutzer auch keine Werte für die Korrekturen und Höhenangaben mehr eingeben, sodass Tippfehler ausgeschlossen werden können.

Von Vorteil ist auch eine Ausgestaltung, bei der das Werkstück als Kugelschreiber mit mehreren Gravierbereichen und unterschiedlichen Gravierhöhen gebildet ist, da dadurch für die unterschiedlichen Bereiche unterschiedliche Farben festgelegt werden können und somit die Bedienung sehr vereinfacht wird.

Vorteilhaft ist auch eine Ausgestaltung, bei der in der Datenbank zu den unterschiedlichen Farben ein Farb-Code zugeordnet ist, da dadurch eventuell notwendige Korrekturen auf einfache Art und Weise durch Anpassung des Farb-Codes vorgenommen werden können.

Die Erfindung wird anschließend in Form eines Ausführungsbeispiels beschrieben, wobei darauf hingewiesen wird, dass die Erfindung nicht auf das dargestellte und beschriebenen Ausführungsbeispiel begrenzt ist.

Es zeigt:
- Fig. 1: eine schematische Darstellung eines Laserplotters;
- Fig. 2: eine schematische Darstellung eines Werkstückes in Form eines Kugelschreibers;
- Fig.3: eine Seitenansicht des Werkstückes, in vereinfachter schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

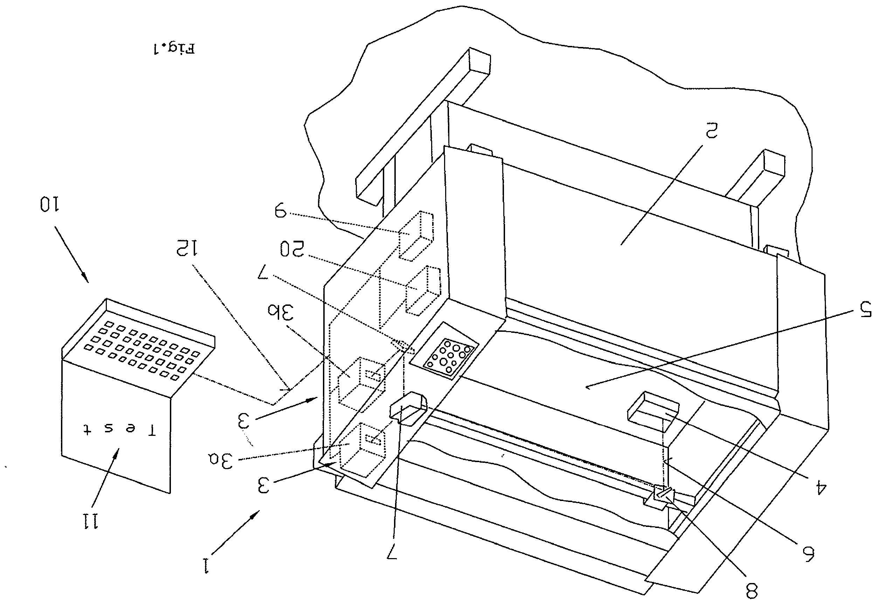

In Fig. 1 ist ein Laserplotter 1, oder auch Lasergravierer genannt, schematisch dargestellt, bei dem in einem Gehäuse 2 mehrere, insbesondere zwei Strahlenquellen 3 in Form von Lasern 3a, 3b angeordnet und betrieben werden, die bevorzugt abwechselnd auf das zu bearbeitende Werkstück 4 einwirken, wobei das Werkstück 4 auf einen Bearbeitungstisch 5 definiert positioniert ist, und ein von der Strahlenquelle 3 abgegebener Laserstrahl 6 über Umlenkelemente 7 an zumindest eine für beide Strahlenquellen 3 ausgebildete verfahrbare Fokussiereinheit 8 gesendet wird, von der der Laserstrahl 6 in Richtung Werkstück 4 abgelenkt und zur Bearbeitung fokussiert wird. Die Steuerung, insbesondere die Positionssteuerung des Werkstückes 4 zum Laserstrahl 6 erfolgt über eine in einer Steuereinheit 9 laufende Software, wobei an einer externen Komponente 10, insbesondere einem Computer oder einem Steuergerät eine Grafik und/oder ein Text, wie schematisch am Computer dargestellt, erstellt wird, welche/r an die Steuereinheit 9 des Laserplotters 1 über eine Datenverbindung 12 übergeben wird, die aus einer hinterlegten Datenbank eine Konvertierung der übergebenen Daten, insbesondere der Grafik und/oder des Textes 11, zum Steuern der einzelnen Elemente des Laserplotters 1 vornimmt. Auf den detaillierten mechanischen Aufbau eines derartigen Laserplotters 1 wird nicht mehr näher eingegangen, da dieser aus den Stand der Technik, insbesondere aus der WO 1999/038643 A der Anmelderin, bereits bekannt ist und aus dieser entnommen werden kann.

Erfindungsgemäß ist nun vorgesehen, dass eine Vereinfachung der Steuerung des Laserplotters 1 geschaffen wird, sodass die Bedienung für den Benutzer erleichtert wird und es zur Minimierung von Fehlern für die Zuordnung der Laser 3a, 3b kommt. Hierzu erfolgt die Zuordnung der unterschiedlichen Strahlenquellen 3 zur übergebenen Grafik und/oder zum übergebenen Text 11 in Form von Farben, insbesondere eines Farb-Codes, wobei in der Datenbank zu den unterschiedlichen Farben ein Korrekturwert für die unterschiedlichen Positionen, insbesondere ein Höhenkorrekturwert, zur Kompensation der unterschiedlichen Fokuslagen oder Brennweiten der unterschiedlichen Strahlenquellen 3 hinterlegt ist bzw. wird.

Man kann also sagen, dass jedem Laser 3a, 3b eine eigene Farbe zugeordnet wird, wobei dieser Farbe in der Datenbank ein Wert zur Korrektur der Wellenlänge zugeordnet ist. Beispielsweise kann für die Bearbeitung von Holz der ersten Strahlenquelle 3, insbesondere dem ersten Laser 3a, die Farbe "Braun" zugeordnet werden, wogegen der zweiten Strahlenquelle 3, insbesondere dem zweiten Laser 3b, die Farbe "Grau" für die Bearbeitung von Metall zugeordnet ist. Damit kann der Benutzer auf einfache Art die Laser 3a, 3b den zu bearbeitenden Materialien zuordnen, sodass die Verwechslungsgefahr und die Falscheingabe von Werten minimiert wird, d.h., dass beispielsweise die Farbe Braun für die Bearbeitung von Holz, insbesondere die Strahlenquelle 3 für Holz, verwendet wird, wogegen die Bearbeitung von Metall mit der Farbe Grau, insbesondere die Strahlenquelle 3 für Metall, durchgeführt wird und bevorzugt die verschiedensten Schattierungen zu den Farben entsprechend zugeordnet sind. Da den Farben in der Datenbank ein entsprechender Korrekturwert einmal zugeordnet ist, braucht der Benutzer nur noch die Grafik bzw. den Text 11 mit der Richtigen Farbe erstellen, worauf die Steuerung die entsprechende Korrektur vornimmt. Somit können ständig wiederkehrende Eingabefehler minimiert werden.

Zum Erstellen einer Grafik oder eines Textes 11 kann der Benutzer eine externe Komponente 10, insbesondere einen PC, Laptop, usw., verwenden, auf der ein standardisiertes Programm, wie beispielsweise Word, Excel, Paint, Corel Draw, usw., läuft. Dazu kann der Benutzer in den Programmen auf einfache Art und Weise die Grafik und/oder den Text 11 erstellen, wobei er hierzu bereits entsprechende Farben auswählt, sprich die Grafik und/oder den Text 11 in Farbe erstellt. Die externe Komponente 10 wird anschließend mit der Steuereinheit 9 des Laserplotters 1 verbunden, sodass die Grafik und/oder der Text 11 an die Steuereinheit 9 übertragen werden kann. Selbstverständlich ist es möglich, dass bereits bei der Erstellung der Grafik und/oder des Textes 11 die externe Komponente 10 mit dem Laserplotter 1, insbesondere der Steuereinheit 9, verbunden ist. Auch ist es möglich, dass der Laserplotter 1 ein Grafikdisplay (nicht dargestellt) aufweist, und dass der Benutzer direkt am Laserplotter 1 die Grafik und/oder den Text 11 erstellt. Es ist auch möglich, dass ein standardisiertes Programm, wie beispielsweise Word, Excel, Paint, Corel Draw, usw. direkt am Laserplotter 1 installiert wird, wozu der Laserplotter 1 mit entsprechender Hardware zum Betreiben eines notwendigen Betriebssystems und der Programme aufweist. Hierzu ist es möglich, dass das Betriebssystem und die Programme in der Steuereinheit 9 abläuft oder das hierfür eine eigene Einheit integriert ist, auf der die Software läuft und die Daten an die Steuereinheit 9 übergibt. Die Steuereinheit steuert die einzelnen Elemente des Laserplotters 1 zum Erzeugen einer Gravur, Markierung und/oder einer Beschriftung am Werkstück 4 an.

Da es bei derartigen standardisierten Programmen unterschiedliche Farbtöne gibt, sind den Farben unterschiedliche Farb-Codes zugeteilt, wozu der Benutzer in der Datenbank einen entsprechenden Bereich angeben kann, d.h., dass der Benutzer in der Datenbank einen Wert von/bis angibt, sodass jeder gleiche bzw. dazwischen liegende Wert der entsprechenden Strahlenquelle 3 zugeordnet wird. Selbstverständlich ist es auch möglich, dass der Benutzer nur einen Wert eingibt und dass automatisch von der Datenbank ein definierter Bereich ermittelt oder festgelegt wird. Auch ist es möglich, dass für jedes Programm unabhängig voneinander ein eigener Bereich definiert wird, sodass auch spezielle Programme verwendet werden können, die einen völlig anderen Farb-Code benützen oder anstelle eines Codes eine andere Kennzeichnung verwenden. Diese definiert der Benutzer zuvor in der Datenbank und ordnet diesem Programm einen entsprechenden von/bis-Bereich zu, sodass mit der anschließenden Datenübertragen die Steuereinheit 9 die Software bevorzugt automatisch erkennt oder. die Datenübertragen aufzeichnet/identifiziert und speichert, sodass bei einen neuerlichen Datentransfer eine automatische Erkennung der Software möglich ist und die entsprechenden Werte zuordenbar sind. Hierzu ist es von Vorteil, wenn der Benutzer vor der Datenübertragung die Aufzeichnung der Übertragung manuell startet, da dadurch sichergestellt wird, dass ein vollständiger Datensatz übertragen wird, der vom Benutzer bewusst aufgenommen werden soll. Speziell bei Sonderprogrammen mit speziellen Codes kann die Software, insbesondere die Daten bzw. Codes, einfach und fehlerlos aufgenommen werden.

Auch ist es möglich, dass an der externen Komponente 10 für unterschiedliche Grafiktiefen und/oder unterschiedliche Werkstückhöhen 13, 14 bzw. Ebenen unterschiedliche Farben definiert werden, und dass diesen Farben unterschiedliche Höhenwerte zugeordnet werden, d.h., dass bei einem Werkstück 4 mit strukturierter Oberfläche, bzw. für unterschiedliche Oberflächenhöhen eine bestimmte Farbe zugeordnet werden kann, zu der in der Datenbank für die Steuereinheit 9 ein weiterer Korrekturwert hinterlegt wird bzw. zugeteilt wird, sodass die unterschiedlichen Fokuspunkte der gemeinsamen Fokussiereinheit 8 der unterschiedlichen Laser 3a, 3b ausgeglichen werden und diese der Benutzer nicht mehr berücksichtigen muss. Dabei ist es auch möglich, dass für die verschiedensten Graviertiefen verschiedene Farben verwendet werden, zu denen dann noch zusätzlich der Korrekturwert eingestellt bzw. eingegeben und gespeichert wird.

Bevorzugt wird in den externen Komponenten 10 oder bei der Übertragung zur Steuereinheit 9 oder von der Steuereinheit 9 selbst jeder Farbe der Grafik und/oder des Textes 11 ein bestimmter vordefinierter Farbcode zugeordnet. Damit ist sichergestellt, dass für die unterschiedlichsten Farben bzw. Schattierungen immer ein Wert vorhanden ist und somit bei entsprechender Auslegung des Bereiches in der Datenbank eine sichere Erkennung für den zu verwendenden Laser 3a, 3b vorhanden ist. Wird beispielsweise eine Farbe oder ein Farbcode verwendet, der noch nicht hinterlegt bzw. gespeichert ist, so ist es möglich, dass bei einer Übertragung oder Zuordnung eines Wertes von der Steuereinheit 9 eine Fehlermeldung ausgegeben wird, sodass der Benutzer vor dem Beginn des Gravier-, Markier- und/oder Beschriftungsvorganges diesen Wert einem Laser 3a, 3b zuordnen kann oder einen entsprechenden Wert eingeben kann. Auch hat der Benutzer bei einem derartigen Fall die Möglichkeit, diesen neuen Wert zusätzlich in der Datenbank für eine Strahlenquelle 3 zu speichern, sodass bei einem neuerlichen Vorgang dieser Wert bzw. diese Farbe wiederum zugeordnet werden kann.

Üblicherweise werden von der Steuereinheit 9 des Laserplotters 1 die Farben, insbesondere die Farb-Codes, aus den unterschiedlichen externen Komponenten 10, insbesondere den unterschiedlichen Grafik-Softwareprogrammen, übernommen, wobei es jedoch möglich ist, dass diese Werte bei der Übernahme auch entsprechend angepasst werden können, d.h., dass beispielsweise je nach verwendetem Programm ein entsprechender Schlüssel hinterlegt ist, der die übergebenen Farb-Codes entsprechend abändert. Somit kann der Speicherplatz in der Datenbank gering gehalten werden, da von den unterschiedlichsten Programmen die Werte entsprechend umgewandelt werden und somit nur noch eine geringe Anzahl von Farbcodes gespeichert werden müssen. Auch ist es damit einfach möglich, neue noch nicht definierte Programme bzw. Codes einzusetzen, die anschließend nur noch richtig zugeordnet werden müssen.

Bevorzugt ist der Laserplotter 1 bzw. die Steuereinheit 9 des Laserplotters 1 derart ausgestattet, dass ein entsprechendes Display vorhanden ist, auf dem die an den externen Komponenten 10 erstellte Grafik und/oder der Text 11 dargestellt wird. Dazu bekommt der Benutzer die Informationen, welcher Laser 3a, 3b welcher Farbe zugeordnet ist bzw. kann der Benutzer eine Simulation ablaufen lassen, wo er sieht, welcher Laser 3a, 3b wann und zu welcher Grafik bzw. Text 11 verwendet wird. Somit ist eine einfach Kontrolle direkt auf der Steuereinheit 9, insbesondere am Laserplotter 1, möglich. Selbstverständlich ist es dabei möglich, dass der Benutzer direkt am Laserplotter 1 Korrekturen vornehmen kann.

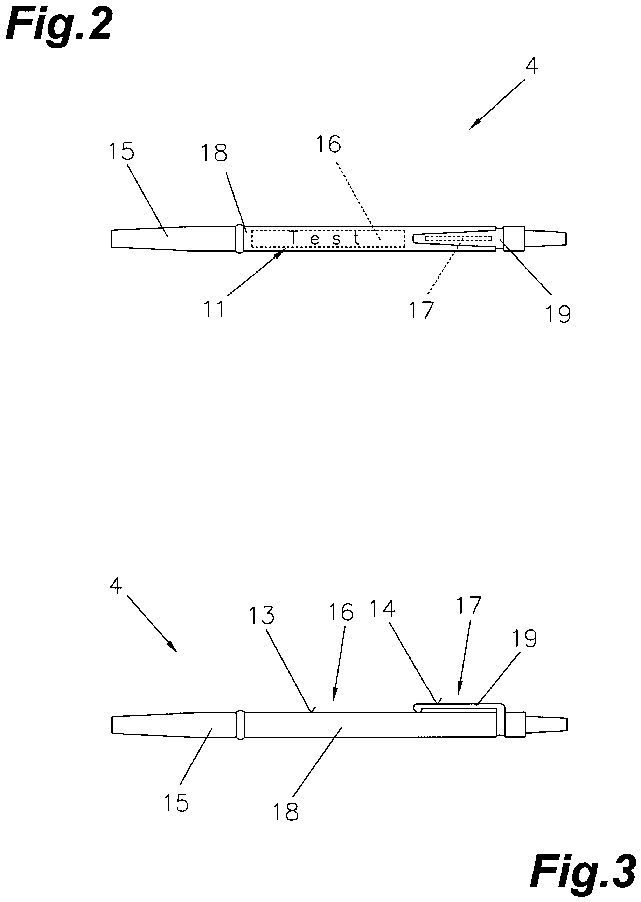

Beispielsweise ist es möglich, dass das Werkstück 4 als Kugelschreiber 15 mit mehreren Gravierbereichen 16, 17 und unterschiedlichen Gravierhöhen bzw. Werkstückhöhen 13, 14 gebildet ist, also die Gravierbereiche 16, 17 in unterschiedlichen Ebenen angeordnet sind. Dabei ist es möglich, dass in den Programmen, insbesondere auf den externen Komponenten 10, oder in der Steuereinheit 9 selbst der Kugelschreiber 15 oder andere Werkstücke 4 als Vorlage gespeichert bzw. hinterlegt ist, sodass der Benutzer diesen einfach immer wieder aufrufen kann. Durch die Speicherung des Werkstückes 4 als Vorlage hat der Benutzer auch den Vorteil, dass er hierzu entsprechende Gravierbereiche 16, 17 bzw. Beschriftungsbereiche definieren bzw. speichern kann, zu denen bestimmten Daten, Informationen usw. hinterlegt sind. Bei der Verwendung eines Kugelschreibers 15 als Werkstück 4 sind bevorzugt zwei Gravierbereiche 16, 17 vorhanden, wie dies in Fig. 2 schematisch mit strichlierten Linien dargestellt ist, wobei der erste Gravierbereich 16 am Gründkörper 18 des Kugelschreibers 15 liegt und der zweite Gravierbereich 17 auf der Befestigungsklammer 19 angeordnet ist. Dadurch weisen die beiden Gravierbereiche 16, 17 unterschiedliche Oberflächenebenen auf, die bei der Bearbeitung berücksichtigt werden müssen. Weiters ist es oftmals der Fall, dass bei Kugelschreiben 15 auch unterschiedliche Materialien, wie beispielsweise Holz als Grundkörper 18 und Metall als Befestigungsklammer 19 oder Kunststoff als Grundkörper 18 und Metall als Befestigungsklammer 19, eingesetzt werden, was wiederum für die Bearbeitung wichtig ist, da die zur Verfügung stehenden Laser 3a, 3b für die Bearbeitung von unterschiedlichen Materialien eingesetzt werden. Somit ist es für eine qualitativ hochwertige Gravur, Markierung oder Beschriftung notwendig, dass für das zu gravierende Material der richtige Laser 3a, 3b verwendet wird, sodass bei unterschiedlichen Materialen die Bearbeitung des Kugelschreibers 15 mit beiden Lasern 3a, 3b in einem Arbeitsgang durchgeführt wird, d.h., dass der Kugelschreiber 15 einmal am Bearbeitungstisch 5 positioniert wird und anschließend nach Start des Bearbeitungsvorganges zuerst der erste Gravierbereich 16 mit beispielsweise dem zweiten Laser 3b und anschließend der zweite Gravierbereich 17 mit beispielsweise dem ersten Laser 3a bearbeitet wird, ohne dabei das Werkstück 4 bzw. den Kugelschreiber 15 vom Bearbeitungstisch 5 zu nehmen bzw. die Position zu verändern oder eine andere Strahlenquelle 3 nach der ersten Bearbeitung einzusetzen bzw. zu tauschen. Beispielsweise ist der erste Laser 3a durch einen CO2-Laser mit einer Leistung von bis zu 200 Watt zur Bearbeitung von Metall und der zweite Laser 3b durch einen Infrarot-Diodenlaser mit einer Leistung bis zu 100 Watt zur Bearbeitung von Holz oder Kunststoff gebildet. Selbstverständlich ist es möglich, dass bei Verwendung ähnlicher Laser 3a, 3b mit ähnlicher Leistung die Bearbeitung eines Gravierbereiches 16, 17 mit beiden Lasern 3a, 3b abwechselnd durchgeführt werden könnte. Der Ordnung halber wird auch darauf hingewiesen, dass selbstverständlich beliebig viele Gravierbereiche 16, 17 an einem Werkstück 4, insbesondere am Kugelschreiber 15, angeordnet, erstellt bzw. definiert werden können.

Ein derartiger Ablauf für die Gravierung eines Kugelschreibers 15 kann beispielsweise wie folgt durchgeführt werden:
Der Benutzer wählt in den standardisierten Programmen auf der externen Komponente 10 aus hinterlegten Werkstücken 4 ein bestimmtes Werkstück 4, wie beispielsweise den Kugelschreiber 15, aus. Dieses Werkstück 4, insbesondere der ausgewählte Kugelschreiber 15, wird ihm dann grafisch am Display bzw. am Bildschirm der externen Komponente 10 angezeigt, wobei gleichzeitig schematisch die möglichen Gravierbereiche 16, 17 dargestellt sind. Der Benutzer kann nunmehr durch Anklicken eines Gravierbereiches 16, 17 diesen aufrufen, worauf er aufgefordert wird, das Material für diesen Gravierbereich 16, 17 zu bestimmen, wozu beispielsweise eine hinterlegte Auflistung angezeigt wird, aus der er das zu bearbeitende Material, wie beispielsweise Holz, Kunststoff, Metall, usw. auswählt, d.h. dass nach dem Betätigen bzw. Aktivieren eines Gravierbereichs 16, 17 eine Auswahl des zu bearbeitenden Materials und/oder des einzusetzenden Lasers 3a, 3b erfolgt. Nach Auswahl des entsprechenden Materials für diesen Gravierbereich 16, 17 bekommt der Benutzer nunmehr die möglichen Farb-Codes und/oder Farben in Form von Punkten, Balken usw. am Display angezeigt, sodass der Benutzer nach Auswahl der Farbe eine entsprechende Grafik 11 bzw. einen entsprechenden Text 11 mit dieser Farbe in dem ausgewählten Gravierbereich 16, 17 erstellen kann, d.h., dass dem Benutzer für einen Gravierbereich 16, 17 definierte Farben und/oder Farb-Codes auswählt. Hierbei ist es selbstverständlich möglich, dass innerhalb eines Gravierbereiches 16, 17 auch unterschiedliche Gravierhöhen bzw. Graviertiefen verwendet werden können, wozu der Benutzer in einfacher Weise eine andere Farbe auswählt, die für eine andere Graviertiefe steht, d.h., dass bei den zur Verfügung gestellten Farben jede Farbe für eine bestimmte Parameter oder einer Kombination von Parametern, wie beispielsweise Graviertiefe, Gravierbreite, usw., steht, bzw. dieser zugeordnet ist. Bevorzugt werden die dargestellten Farben entsprechend beschriftet angezeigt, sodass der Benutzer sofort erkennen kann, welche Farbe wofür eingesetzt wird. Beispielsweise kann innerhalb des Farbbalkens oder eines Farbpunktes die Graviertiefe oder Gravierbreite eingetragen sein, sodass der Benutzer auf einem Blick die Farbe und die Graviertiefe oder Gravierbreite erkennen bzw. ablesen kann. Nachdem der Benutzer die Grafik 11 und/oder dem Text 11 für den ersten ausgewählten Grafikbereich 16 erstellt hat, wählt er einfach den nächsten Gravierbereich 17 aus, worauf er wiederum aufgefordert wird, das Material für diesen Bereich auszuwählen. Wählt er nunmehr ein anderes Material aus, so wird ihm bevorzugt eine andere Farbpalette also für den ersten Gravierbereich 16 mit anderem Material zur Verfügung gestellt. Somit ist immer eine eindeutige Zuordnung der Farben gegeben und der Benutzer kann diese somit nicht verwechseln bzw. kommt eine Farbe nur einmal für einen bestimmten Graviervorgang mit unterschiedlich hinterlegten Parametern vor.

Wesentlich ist bei einem derartig vereinfachten Ablauf, dass in der Datenbank und/oder zum gespeicherten Werkstück 4 die Daten entsprechend hinterlegt sind. Beispielweise sind bei dem zuvor beschriebenen Ablauf für eine Farbe einer oder mehrere der folgende Daten bzw. Parameter gespeichert: - Strahlenquelle 1 oder 2, - Graviertiefe, - Werkstückebene, - Korrekturwert für den Laser, - Gravierbreite, - Graviertiefe, - Leistung der Strahlquelle, - Frequenz, - Geschwindigkeit, - Durchgänge, - Gas, - Material, - High Quality, - Farbe und/oder Farbcode (insbesondere Bereich Farbcode von ... bis ...), - Werkstückebene, - Gravierbereich, - Werkstück (insbesondere Werkstückname, Werkstücknummer) usw.

Somit wird in einfacher Weise gegenüber dem Stand der Technik eine wesentliche Vereinfachung für den Benutzer geschaffen, wodurch die Fehlerquellen minimiert werden können. Der Benutzer braucht damit in keiner Weise auf die Korrektur bzw. Fokussierung für die unterschiedlichen Laser achten, da diese bereits hinterlegt sind. Bei einem derartigen Ablauf wird in vorteilhafter Weise auch erreicht, dass die Fehleingaben minimiert werden, da der Benutzer nur aus den Gravierbereichen 16, 17 fix zugeordneten Vorgaben auswählen kann. Wesentlich ist hierbei, dass nach der Auswahl eines Gravierbereiches 16, 17 der Benutzer nunmehr ein zu bearbeitendes Material oder Laser 3a, 3b auswählen muss, worauf nur noch jene Farben dem Benutzer zur Verfügung gestellt werden, die für die Bearbeitung dieses Materials oder Lasers 3a oder 3b möglich sind, d.h., dass bei Auswahl eines Materials der entsprechende Laser 3a, 3b mit dem entsprechenden Korrekturwert hinterlegt ist und dem Benutzer nunmehr ein Vorschlag für die unterschiedlichsten Graviertiefen und/oder Gravierbreiten usw. mit unterschiedlichsten Farben zur Verfügung gestellt wird. Für die Bildung der unterschiedlichen Graviertiefen wird bei dem dargestellten Ausführungsbeispiel der Bearbeitungstisch 5 entsprechend den hinterlegten Werten verfahren.

Weiters ist es möglich, dass bei der Auslieferung des Laserplotters 1 in einem Speicher des Laserplotters 1 oder in einem Speicher einer externen Steuereinheit 9 für den Laserplotter 1 oder auf einer mitgelieferten CD-Rom bzw. DVD standardisierte Werkstücke 4 , wie beispielsweise unterschiedliche Kugelschreiber 15, Flaschenöffner, Messer, usw., für die unterschiedlichsten Anwendungssoftware mitgeliefert werden. Bei diesen vordefinierten Werkstücken 4 sind die häufigsten Gravierbereiche 16, 17 an den virtuellen Werkstücken 4 definiert, wobei hierzu bevorzugt für jeden möglichen Gravierbereich 16, 17 eine eigene Farbpalette hinterlegt ist. Der Benutzer braucht somit nur noch die Werkstücke 4, insbesondere den Gravierbereich16, 17, auf seine zu bearbeitenden Rohlinge anpassen und für die eingesetzten Laser 3a, 3b die entsprechenden Korrekturwerte eingeben bzw. aus einer Liste seine Laser 3a, 3b auswählen. Die weiteren benötigten Daten, wie beispielsweise die Gravurtiefe, die Bearbeitungshöhe bzw. Bearbeitungsfläche, usw. sind bereits zu den hinterlegten Werkstücken 4 und zu den unterschiedlich möglichen Farben gespeichert, wodurch eine einfache Inbetriebnahme eines derartigen Laserplotters 1 ermöglicht wird. Dabei ist es selbstverständlich möglich, dass der Benutzer die hinterlegten Werkstücke 4 bearbeiten kann und neue Gravierbereich 16, 17 festlegen kann bzw. bereits vordefinierte Gravierbereiche 16, 17 gelöscht oder erweitert werden können. Auch ist es möglich, die hinterlegten Daten bzw. Werte einfach abzuändern und somit an seine benötigten Werte anzupassen.

Weiters ist es auch möglich, dass eine Erkennungsvorrichtung 20 im Laserplotter 1 angeordnet ist, die automatisch die eingesetzten Strahlenquellen 3 erkennt. Dabei ist es möglich, dass bei einem Tausch einer oder beider Strahlenquellen 3 über die Erkennungsvorrichtung 20 die neu eingesetzten Strahlenquellen 3 erkennt und dem Benutzer anzeigt bzw. die Korrekturwerte automatisch anpasst, d.h., dass in einer Datenbank für die unterschiedlichsten Strahlenquellen 3 die verschiedensten Korrekturwerte hinterlegt sind, sodass bei einem Tausch von zumindest einer Strahlenquelle 3 der für die alte ausgetauschte Strahlenquelle 3 hinterlegte Wert verändert wird. Hierbei ist es aber auch möglich, dass die Strahlenquelle 3 einen Chip, Strichcode, Speicher oder Transponder, insbesondere ein RFID-Element, aufweist, welches von der Erkennungsvorrichtung 20 abgefragt wird. In diesen Systemen ist es möglich, dass die verschiedensten Daten der Strahlenquelle 3 mitgeliefert werden, die über die Erkennungsvorrichtung 20 abgefragt und automatisch angepasst werden können. Insbesondere ist es von Vorteil, wenn der Korrekturwert hinterlegt ist, da damit eine interne Datenbank für die unterschiedlichsten Strahlenquellen 3 entfallen kann und immer wieder neu entwickelte Strahlenquellen 3 eingesetzt werden können, ohne das dabei der Benutzer manuell den Korrekturwert eingeben muss oder eine Datenbank warten muss

Auch ist es möglich, dass bei nicht vorhandenen automatischer Erkennungsvorrichtung 20 der Benutzer eine derartige Strahlenquellen-Datenbank zur Verfügung hat, aus der dieser manuell eine Strahlenquelle 3 auswählen kann, sodass alle notwendigen Daten, insbesondere der Korrekturwert, entsprechend angepasst werden kann.

Die automatische Erkennung der Strahlenquellen eignet sich besonders dann, wenn der Laserplotter 1 zum modularen Einsatz für die unterschiedlichsten Laser 3a oder 3b ausgebildet ist, d.h., dass beispielsweise für die unterschiedlichste zu bearbeitenden Werkstücke 4 unterschiedlichste Strahlenquellen 3 eingesetzt werden, die mit wenigen Handgriffen ausgetauscht werden können, wozu eine Aufnahmevorrichtung (nicht dargestellt) mit automatischer Positionierung und Kontaktierung eingesetzt wird. Tauscht ein Benutzer also eine Strahlenquelle 3 aus, so wird die neue eingesetzte Strahlenquelle 3 erkannt und die entsprechenden Daten abgerufen, die anschließend verwendet werden.

Selbstverständlich ist es auch möglich, dass mit dem zuvor beschriebenen Laserplotter 1 das zu bearbeitende Werkstück 4 auch geschnitten werden kann, sprich der Fokuspunkt eines der beiden Lasers 3a, 3b unterhalb des Werkstückes 4 gelegt wird bzw. der Bearbeitungstisch 5 verfahren wird und der Bearbeitungsvorgang mehrmals hintereinander durchgeführt wird, sodass der Laserstrahl 6 durch das Werkstück 4 hindurch dringt und es an dieser Stelle abschneidet. Auch ist es möglich, dass bei der Bearbeitung des Werkstückes 4 nur eine farbliche Veränderung der Oberfläche geschaffen wird.

## Patentansprüche

1. Verfahren zum Gravieren, Markieren und/oder Beschriften eines Werkstückes (4) mit einem Laserplotter (1), bei dem in einem Gehäuse (2) des Laserplotters (1) zumindest zwei Strahlquellen (3) in Form von Lasern (3a, 3b) eingesetzt werden, die bevorzugt abwechselnd auf das zu bearbeitendes Werkstück (4) einwirken, wobei das Werkstück (4) auf einem Bearbeitungstisch (5) definiert abgelegt wird und ein von der Strahlquelle (3) abgegebener Laserstrahl (6) über Umlenkelemente (7) an zumindest eine für die zumindest zwei Strahlquellen (3) ausgebildete Fokussiereinheit (8) gesendet wird, von der der Laserstrahl (6) in Richtung Werkstück (4) abgelenkt und zur Bearbeitung fokussiert wird, wobei die Positionssteuerung des Werkstückes (4) zum Laserstrahl (6), über eine in einer Steuereinheit (9) des Laserplotters (1) laufende Software erfolgt, wobei an einer externen Komponente (10), insbesondere einem Computer oder einem Steuergerät, eine Grafik (11) und/oder ein Text (11) erstellt wird, welche an die Steuereinheit (9) des Laserplotters (1) übergeben wird, die aus einer hinterlegten Datenbank eine Konvertierung der übergebenen Daten der Grafik (11) und/oder des Textes (11) zum Steuern der einzelnen Elemente des Laserplotters (1) vornimmt, **dadurch gekennzeichnet, dass** die Zuordnung der unterschiedlichen Strahlenquellen (3) zur übergebenen Grafik (11) und/oder zum Text (11) in Form von Farben, insbesondere eines Farb-Codes, erfolgt, wobei in der Datenbank zu den unterschiedlichen Farben ein Korrekturwert für die unterschiedliche Positionen als ein Höhenkorrekturwert zur Kompensation der unterschiedlichen Fokuslagen oder Brennweiten der unterschiedlichen Strahlenquellen (3) hinterlegt wird, und dass eine Farbe, insbesondere ein Farb-Code, durch einen Bereich, insbesondere einer Bereichsangabe von - bis, bestimmt wird.

2. Verfahren nach Anspruch 1, **dadurch gekennzeichnet, dass** auf der externen Komponente (10) standardisierte Programme, wie beispielsweise, Word, Excel, Paint, Corel Draw, usw. laufen, von denen die Grafik (11) und/oder der Text (11) mit unterschiedlichen Farben erstellt und anschließend an die Steuereinheit (9) des Laserplotters (1) übertragen werden.

3. Verfahren nach Anspruch 1 oder 2, **dadurch gekennzeichnet, dass** an der externen Komponente (10) für unterschiedliche Graviertiefen und/oder unterschiedliche Werkstückhöhen (13, 14) unterschiedliche Farben definiert werden, und dass diesen Farben unterschiedliche Höhenwerte zugeordnet werden.

4. Verfahren nach einem oder mehreren der vorhergehenden Ansprüche, **dadurch gekennzeichnet, dass** in der externen Komponente (10) oder bei der Übertragung zur Steuereinheit (9) oder von der Steuereinheit (9) selbst jeder Farbe der Grafik (11) und/oder des Textes (11) ein bestimmter vordefinierter Farbcode zugeordnet wird.

5. Verfahren nach einem oder mehreren der vorhergehenden Ansprüche, **dadurch gekennzeichnet, dass** von der Steuereinheit (9) des Laserplotters (1) die Farbe, insbesondere die Farb-Codes, aus den unterschiedlichen externen Komponenten (10), insbesondere den unterschiedlichen Grafik-Softwareprogrammen, übernommen wird.

6. Verfahren nach Anspruch 5, **dadurch gekennzeichnet, dass** in der Steuereinheit (9) des Laserplotters (1) die von den unterschiedlichen Komponenten (10) übergebenen Farb-Codes jeweils einem für die verwendete externe Komponente hinterlegten Farb-Code zugeordnet wird.

7. Verfahren nach Anspruch 3, **dadurch gekennzeichnet, dass** den Farben unterschiedliche Farb-Codes zugeteilt sind und der Korrekturwert der Strahlenquelle mit dem Farb-Code für die Graviertiefe kombiniert wird.

8. Verfahren nach einem oder mehreren der vorhergehenden Ansprüche, **dadurch gekennzeichnet, dass** besagtes Verfahren zum Gravieren, Markieren und/oder Beschriften eines Kugelschreibers (15) mit unterschiedlichen Gravierbereiche (16, 17) und unterschiedlichen Höhenpositionen eingesetzt wird.

9. Laserplotter (1) zum Gravieren, Markieren und/oder Beschriften von Werkstücken (4), bestehend aus einem Bearbeitungstisch (5) zum Positionieren des Werkstückes (4), zumindest zwei Strahlenquellen (3) in Form von Lasern (3a, 3b) mit entsprechenden Umlenkelementen (7) und einer bevorzugt verfahrbaren Fokussiereinheit (8) und einer Steuereinheit (9) zum Steuern der einzelnen Elemente, wobei die Steuereinheit (9) zum Empfang von an einer externen Komponente (10) erzeugten Daten, einer Grafik (11) und/oder einem Text (11), ausgebildet ist und eine Datenbank zur Konvertierung der übersendeten Daten angeordnet ist, **dadurch gekennzeichnet, dass** der Laserplotter so ausgebildet ist, dass die Zuordnung der unterschiedlichen Strahlenquellen (3) zur übergebenen Grafik und/oder zum übergebenen Text in Form von Farben, insbesondere eines Farb-Codes, erfolgt, wobei in der Datenbank zu den unterschiedlichen Farben ein Korrekturwert für die unterschiedliche Positionen als ein Höhenkorrekturwert der unterschiedlichen Strahlenquellen (3) zur Kompensation der unterschiedlichen Fokuslagen oder Brennweiten der unterschiedlichen Strahlenquellen (3) hinterlegt ist, und dass in der Datenbank zu einer Farbe, insbesondere einem Farb-Code, ein Bereich, insbesondere eine Bereichsangabe von - bis, hinterlegt ist.

10. Laserplotter nach Anspruch 9, **dadurch gekennzeichnet, dass** der Laserplotter so ausgebildet ist, dass zum Gravieren des Werkstückes (4) der Bearbeitungstisch (5) und/oder die Fokussiereinheit (8) in der Höhe verstellbar sind.

11. Laserplotter nach einem oder mehreren der vorhergehenden Ansprüche 9 bis 11, **dadurch gekennzeichnet, dass** der Laserplotter so ausgebildet ist, dass für die unterschiedlichen Strahlenquellen (3) und für die unterschiedlichen Graviertiefen verschiedene Farben definiert sind.

## Claims

1. Method for engraving, marking and/or inscribing a workpiece (4) with a laser plotter (1), in which at least two irradiation sources (3) in the form of lasers (3a, 3b) are used in a housing (2) of the laser plotter (1), which preferably act in alternating manner on the workpiece (4) to be processed, wherein the workpiece (4) is deposited in a defined manner on a processing table (5) and a laser beam (6) emitted by the irradiation source (3) is sent via deflecting elements (7) to at least one focusing unit (8) formed for the at least two irradiation sources (3), from which the laser beam (6) is deflected in the direction of the workpiece (4) and focused for processing, wherein the position control of the workpiece (4) relative to the laser beam (6) is effected by means of a software running in a control unit (9) of the laser plotter (1), wherein at an external component (10), in particular a computer or control device, a graphic (11) and/or a text (11) is produced which is transferred to the control unit (9) of the laser plotter (1), which performs a conversion of the transferred data of the graphic (11) and/or text (11) from a stored database for controlling the individual elements of the laser plotter (1), **characterized in that** the assignment of the different irradiation sources (3) to the transferred graphic (11) and/or to the text (11) takes place in the form of colours, in particular of a colour code, whereby a correction value for the individual positions is stored in the database for the individual colours as a height correction value for compensating the different focus positions or focal lengths of the individual irradiation sources (3), and **in that** a colour, in particular a colour code, is defined by a range, in particular by a range specification from - to.

2. Method according to Claim 1, **characterised in that** standardised programs, such as e.g. Word^{®}, Excel^{®}, MS Paint^{®}, Corel Draw^{®}, etc., run on the external component (10), from which the graphic (11) and/or the text (11) are created with differing colours and subsequently transmitted to the control unit (9) of the laser plotter (1).

3. Method according to Claim 1 or 2, **characterised in that** individual colours are defined on the external component (10) for different engraving depths and/or different workpiece heights (13, 14), and that specific height values are assigned to these colours.

4. Method according to one or more of the preceding claims, **characterised in that** in the external component (10) or during transmission to the control unit (9) or from the control unit (9) itself, a specific predefined colour code is assigned to each colour of the graphic (11) and/or text (11).

5. Method according to one or more of the preceding claims, **characterised in that** the control unit (9) of the laser plotter (1) accepts the colour, in particular the colour codes, from the different external components (10), in particular the different graphics software programmes.

6. Method according to Claim 5, **characterised in that** in the control unit (9) of the laser plotter (1) the colour codes transferred from the various components (10) are each assigned to a colour code stored for the external component used.

7. Method according to Claim 3, **characterised in that** different colour codes are assigned to the colours and the correction value of the irradiation source is combined with the colour code for the engraving depth.

8. Method according to one or more of the preceding claims, **characterized in that** said method is used for engraving, marking and/or inscribing a ball pen (15) with several engraving areas (16, 17) and various height positions.

9. Laser plotter (1) for engraving, marking and/or inscribing workpieces (4), comprising a processing table (5) for positioning the workpiece (4), at least two irradiation sources (3) in the form of lasers (3a, 3b) with corresponding deflection elements (7) and a preferably movable focusing unit (8) and a control unit (9) for controlling the individual elements, wherein the control unit (9) is designed to receive data, a graphic (11) and/or a text (11), generated at an external component (10), and a database is arranged for converting the transmitted data, **characterised in that** the laser plotter is designed in such a way that the assignment of the individual irradiation sources (3) to the transmitted graphic and/or to the transmitted text takes place in the form of colours, in particular a colour code, wherein a correction value for the different positions is stored in the database for the individual colours as a height correction value of the individual irradiation sources (3) in order to compensate for the different focus positions or focal lengths of the respective irradiation sources (3), and **in that** a range, in particular a range specification from - to, is stored in the database for a colour, in particular a colour code.

10. Laser plotter according to claim 9, **characterised in that** the laser plotter is designed in such a way that the processing table (5) and/or the focusing unit (8) are height-adjustable for engraving the workpiece (4).

11. Laser plotter according to one or more of the preceding claims 9 to 11, **characterized in that** the laser plotter is designed in such a way that specific colours are defined for the individual irradiation sources (3) and for the different engraving depths.

## Revendications

1. Procédé permettant de réaliser une gravure, un marquage et/ou une inscription sur une pièce (4) au moyen d'un traceur laser (1), selon lequel au moins deux sources de rayonnement (3) sous forme de lasers (3a, 3b) qui agissent de préférence alternativement sur la pièce (4), sont insérées dans un boîtier (2) du traceur laser (1), la pièce (4) étant déposée de manière définie sur une table d'usinage (5) et un faisceau laser (6) émis par la source de rayonnement (3) envoyé par l'intermédiaire d'éléments de renvoi (7) à au moins une unité de focalisation (8) conçue pour deux sources de rayonnement (3) à partir de laquelle le faisceau laser (6) est dévié en direction de la pièce (4) et focalisé pour l'usinage, la commande de positionnement de la pièce (4) par rapport au faisceau laser (6) étant effectuée par l'intermédiaire d'un logiciel tournant dans une unité de commande (9) du traceur laser (1), un graphique (11) et/ou un texte (11) étant créé sur un composant externe (10), en particulier un ordinateur ou un appareil de commande, et transmis à l'unité de commande (9) du traceur laser (1), qui procède à une conversion des données transmises du graphique (11) et/ou du texte (11) à partir d'une base de données enregistrée en vue de la commande des différents éléments du traceur laser (1), **caractérisé en ce que** l'affectation des différentes sources de rayonnement (3) par rapport au graphique transmis (11) et/ou au texte (11) est effectuée sous forme de couleurs, en particulier d'un code de couleur, une valeur de correction pour les différentes positions étant enregistrée dans la base de données pour les différentes couleurs sous forme d'une valeur de correction de la hauteur permettant de compenser les différentes positions focales ou distances focales des différentes sources de rayonnement (3), et une couleur, en particulier un code de couleur, étant définie par une plage, en particulier par une fourchette de - à.

2. Procédé selon la revendication 1, **caractérisé en ce que** des programmes standardisés, comme par exemple Word, Excel, Paint, Corel Draw, etc., qui créent le graphique (11) et/ou le texte (11) avec différentes couleurs et les envoient ensuite à l'unité de commande (9) du traceur laser (1), tournent sur le composant externe (10).

3. Procédé selon la revendication 1 ou 2, **caractérisé en ce que** différentes couleurs sont définies sur le composant externe (10) pour différentes profondeurs de gravure et/ou différentes hauteurs de pièce (13, 14), et que différentes valeurs de hauteur sont affectées à ces couleurs.

4. Procédé selon une ou plusieurs des revendications précédentes, **caractérisé en ce qu'**un certain code de couleur prédéfini est affecté à chaque couleur du graphique (11) et/ou du texte (11) dans le composant externe (10) ou pendant la transmission vers l'unité de commande (9) ou par l'unité de commande (9) en soi.

5. Procédé selon une ou plusieurs des revendications précédentes, **caractérisé en ce que** la couleur, en particulier les codes de couleur, est reprise à partir des différents composants externes (10), en particulier des différents programmes de logiciel graphique, par l'unité de commande (9) du traceur laser (1).

6. Procédé selon la revendication 5, **caractérisé en ce que** les codes de couleur transmis par les différents composants (10) sont respectivement affectés à un code de couleur enregistré pour le composant externe employé dans l'unité de commande (9) du traceur laser (1).

7. Procédé selon la revendication 3, **caractérisé en ce que** différents codes de couleur sont affectés aux couleurs et que la valeur de correction de la source de rayonnement est combinée avec le code de couleur pour la profondeur de gravure.

8. Procédé selon une ou plusieurs des revendications précédentes, **caractérisé en ce que** ledit procédé permettant de réaliser une gravure, un marquage et/ou une inscription d'un stylo à bille (15) est employé avec différentes zones de gravure (16, 17) et différentes positions de hauteur.

9. Traceur laser (1) permettant de réaliser une gravure, un marquage et/ou une inscription de pièces (4), composé d'une table d'usinage (5) pour le positionnement de la pièce (4), d'au moins deux sources de rayonnement (3) sous forme de lasers (3a, 3b) avec des éléments de renvoi approprié (7) et d'une unité de focalisation (8), de préférence mobile, et d'une unité de commande (9) en vue de la commande des différents éléments, l'unité de commande (9) étant conçue en vue de la réception des données, d'un graphique (11) et/ou d'un texte (11) générés sur un composant externe (10), et une base de données prévue pour la conversion des données transmises, **caractérisé en ce que** le traceur laser est conçu de façon à ce que l'affectation des différentes sources de rayonnement (3) par rapport au graphique transmis et/ou au texte transmis soit effectuée sous forme de couleurs, en particulier d'un code de couleur, une valeur de correction pour les différentes positions étant enregistrée dans la base de données pour les différentes couleurs sous forme d'une valeur de correction de la hauteur des différentes sources de rayonnement (3) permettant de compenser les différentes positions focales ou distances focales des différentes sources de rayonnement (3), et une plage, en particulier une fourchette de - à, enregistrée pour une couleur, en particulier un code de couleur.

10. Traceur laser selon la revendication 9, **caractérisé en ce que** le traceur laser est conçu de façon à ce que la table d'usinage (5) et/ou l'unité de focalisation (8) sont réglables en hauteur pour la gravure d'une pièce (4).

11. Traceur laser selon une ou plusieurs des revendications précédentes 9 à 11, **caractérisé en ce que** le traceur laser est conçu de façon à ce que différentes couleurs sont définies pour les différentes sources de rayonnement (3) et pour les différentes profondeurs de gravure.
